# EUROPÄISCHE PATENTSCHRIFT

(11) **EP 2 226 871 B1**
(45) Veröffentlichungstag und Bekanntmachung des Hinweises auf die Patenterteilung: **11.09.2013**
(21) Anmeldenummer: 10155456.6
(22) Anmeldetag: 04.03.2010
(51) Int. Cl.: H01M 2/20, H01M 2/30, H01R 4/48

(54) **Akkumulator bzw. Batterie mit Anschlusselement**
Accumulator or battery with connection element
Accumulateur ou batterie dotés d'un élément de raccordement

(30) Priorität: 05.03.2009 DE 202009003088 U
(43) Veröffentlichungstag der Anmeldung: 08.09.2010
(73) Patentinhaber: Zumtobel Lighting GmbH, 6850 Dornbirn (AT)
(72) Erfinder: Zipper, Rene, 6844, Altach (AT)
(74) Vertreter: Thun, Clemens

(56) Entgegenhaltungen:
- DE-A1- 19 617 259
- DE-C- 544 101
- DE-T2- 60 219 042
- GB-A- 2 452 820
- JP-A- 2003 068 272
- US-A- 5 876 237

## Beschreibung

Die vorliegende Erfindung betrifft einen Akkumulator bzw. eine Batterie mit einem Anschlusselement zum Anschließen eines Kabels an den Akkumulator bzw. die Batterie. Ferner betrifft die vorliegende Erfindung ein Anschlusselement zur Verwendung an einem Akkumulator bzw. einer Batterie.

Akkumulatoren finden in unterschiedlichsten Geräten Verwendung, beispielsweise in sog. Notlichtleuchten, deren Betrieb während eines Stromausfalls oder Notfalls durch die in dem Akkumulator gespeicherte Energie aufrechterhalten werden soll. Die vorliegende Erfindung betrifft dabei insbesondere die Problematik des Anschlusses des Akkumulators bzw. der Batterie an das zugehörige Gerät.

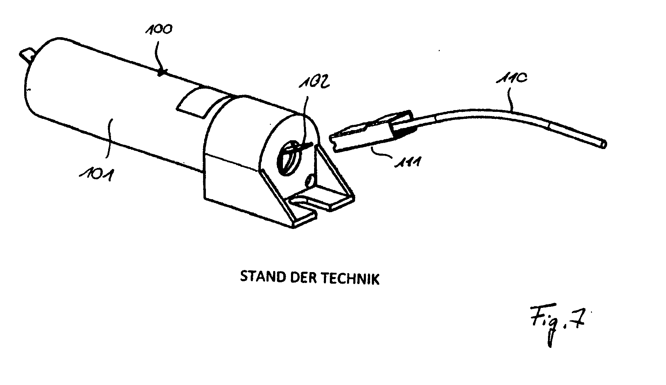

Eine aus dem Stand der Technik bekannte Lösung hierfür ist in Figur 7 dargestellt, welche einen allgemein mit dem Bezugszeichen 100 versehenen Akkumulator mit einem länglichen, zylinderförmigen Gehäuse 101 zeigt. Der Akkumulator 100 soll hierbei über ein Kabel 110 mit dem nicht dargestellten Gerät verbunden werden. Hierzu ist an einer Stirnseite des Akkumulatorgehäuses 100 eine Metallzunge 102 - ein sog. Tag - angeordnet, an welche das zu dem Akkumulator 100 führende Kabel 110 angeschlossen wird. Das Kabel 101 weist an seinem Ende eine Flachsteckhülse 111 auf, die auf die Metallzunge 102 aufgesteckt wird. Die Flachsteckhülse 101 besteht aus Sicherheitsgründen aus einem isolierenden Gehäuse, beispielsweise aus Kunststoff.

Die aus dem Stand der Technik bekannte und in Figur 7 dargestellte Lösung ist verhältnismäßig aufwendig, da zunächst das Kabel 100 mit der Flachsteckhülse 101 bestückt werden muss und erst anschließend der Akkumulator 100 kontaktiert werden kann.

Weitere aus dem Stand der Technik bekannte Lösungen sind ebenfalls nur schwierig zum dauerhaften, unmittelbaren Anschluss eines Kabels an eine Batterie bzw. einen Akkumulator geeignet.

Die DE 544 101 beschreibt eine Lötfahne für einen Spannungsabgriff einer Batterie, die gleichzeitig ein Kabel provisorisch so in die richtige Lage bringen soll, dass ein verlöten des Kabels mit der Batterie einfach bzw. in einem Arbeitsgang mit dem Verlöten des Spannungsabgriffs erfolgen kann. Dazu sind Lötösen vorgesehen, in welche das Kabel eingesteckt werden kann.

Weitere Schriften, beispielsweise die GB 2452 820 A oder die DE 602 19 042 T2, betreffen Anschlusselemente, die wiederum im Wesentlichen mit massiven Verbindungsstrukturen zusammenwirken und daher keine Verbesserungsvorschlag für die Befestigung eines Kabels liefern. Dazu ist beispielsweise ein Klemmkontakt gezeigt der ein Verbindungsmesser aufnimmt und klemmend fixiert. Für den unmittelbaren Anschluss eines Kabels ist dieser Klemmkontakt jedoch nicht geeignet.

Eine verbesserte Möglichkeit ein Kabel unmittelbar an eine Batterie bzw. einen Akkumulator anzuschließen ist den Schriften US 5,876,237 bzw. DE 196 17 259 A1 zu entnehmen. Diese Schriften offenbaren ein Anschlusselement mit die eine metallische Feder aufweisen, welche einen Steck-Klemmkontakt bildet. Jedoch bleibt die Funktion dieser Feder ohne komplizierte Führungsmittel für das anzuschließende Kabel unzuverlässig.

Der vorliegenden Erfindung liegt dementsprechend die Aufgabe zugrunde, eine neuartige Möglichkeit zum Anschließen eines Akkumulators zur Verfügung zu stellen, welche im Vergleich zu der bekannten Lösung weniger aufwendig ist.

Die Aufgabe wird durch einen Akkumulator bzw. eine Batterie mit den Merkmalen des Anspruchs 1 sowie durch ein Anschlusselement zur Verwendung an einem

Akkumulator bzw. einer Batterie gemäß Anspruch 12 gelöst. Vorteilhafte Weiterbildungen sind Gegenstand der abhängigen Ansprüche.

Die erfindungsgemäße Lösung beruht auf der Idee, an dem Akkumulator bzw. der Batterie an Stelle der herkömmlichen Metallzunge ein neuartiges Anschlusselement zum Anschließen eines Kabels anzuordnen, wobei das Anschlusselement in Form eines Steckkontakts ausgebildet ist. Erfindungsgemäß ist dementsprechend nunmehr das Anschlusselement derart ausgestaltet, dass das anzuschließende Kabel unmittelbar mit dem Akkumulator verbunden werden kann, ohne dass dieses zuvor mit einer speziellen Steckhülse bestückt werden müsste. Die Verbindung zwischen Kabel und Akkumulator ist dementsprechend deutlich einfacher, schneller und kostengünstiger durchzuführen.

Erfindungsgemäß ist das Anschlusselement aus einer Metallzunge gebildet, welche eine Einstecköfnung für das Kabelende aufweist. Hierfür kann beispielsweise die Metallzunge im Wesentlichen U-förmig gebogen sein, wobei dann die Einstecköffnung vorzugsweise im Bereich des Mittelschenkels der Metallzunge ausgebildet ist.

Gemäß der vorliegenden Erfindung ist ferner vorgesehen, dass das Anschlusselement einen so genannten Steck-Klemmkontakt bildet, bei dem also nicht nur ein Anschluss zwischen Akkumulator bzw. Batterie und Kabel hergestellt wird sondern gleichzeitig auch noch das Kabelende klemmend fixiert wird. Hierdurch ist eine dauerhafte und zuverlässige Verbindung zwischen Kabel und Akkumulator bzw. Batterie sichergestellt.

Um den zuvor beschriebenen Steck-Klemmkontakt zu bilden, kann vorgesehen sein, dass die beiden Seitenschenkel der Metallzunge einen Klemmbereich für das Kabelende bilden. Insbesondere kann einer der beiden Schenkel kürzer als der andere Schenkel sein und zu dem längeren Schenkel hin ausgerichtet sein. Der kürzere der beiden Schenkel kann dann an seinem Ende eine Ausnehmung bzw. Einkerbung aufweisen, mit deren Hilfe die Fixierung des Kabels verbessert wird.

Das erfindungsgemäße Anschlusselement ist vorzugsweise mit dem Akkumulator bzw. der Batterie fest verbunden. Beispielsweise kann es mittels Punktschweißen an der Stirnseite des Akkumulators bzw. der Batterie oder mittels Verlöten befestigt sein.

In einer Weiterbildung der vorliegenden Erfindung ist dem zuvor beschriebenen erfindungsgemäßen Akkumulator zusätzlich ein auf die Stirnseite aufzusetzendes Aufsatzelement zugeordnet, welches einen Berührschutz für das Anschlusselement bildet. Das Aufsatzelement ist hierbei vorzugsweise aus einem isolierenden Material, insbesondere aus Kunststoff gebildet und könnte ferner gleichzeitig auch ein Befestigungselement zur Montage des Akkumulators beispielsweise in einem Leuchtengehäuse darstellen.

Nachfolgend soll die Erfindung anhand der beiliegenden Zeichnung näher erläutert werden. Es zeigen:
- Figur 1: eine erste Ansicht eines erfindungsgemäßen Akkumulators mit einem daran befindlichen Anschlusselement und einem angeschlossenen Kabel;
- Figur 2: den Akkumulator von Figur 1 mit dem daran angeordneten Aufsatzelement;
- Figuren 3 bis 6: Ansichten des Anschlusselements und
- Figur 7: eine aus dem Stand der Technik bekannte Lösung zur elektrischen Verbindung eines Akkumulators.

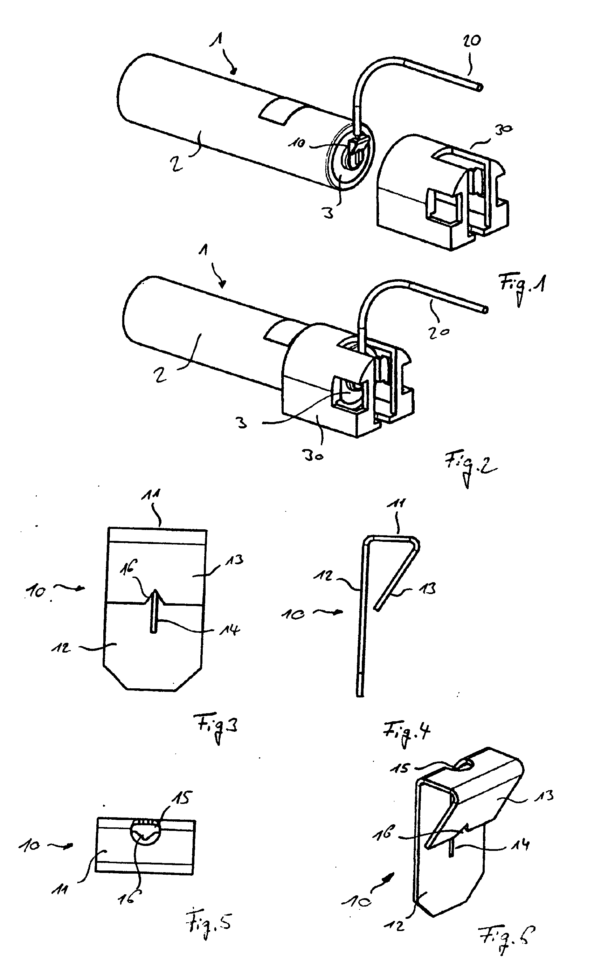

Der allgemein mit dem Bezugszeichen 1 versehene erfindungsgemäße Akkumulator ist in üblicherweise zylinderförmig ausgebildet, wobei an einer Stirnseite 3 des Gehäuses 2 des Akkumulators 1 ein Kabel 20 anzuschließen ist. Hierfür ist ein Anschlusselement 10 vorgesehen, dessen nähere Ausgestaltung den Figuren 3 bis 6 entnommen werden kann.

Das erfindungsgemäße Anschlusselement 10 ist wiederum aus einer Metallzunge gebildet, nunmehr allerdings derart ausgestaltet, dass es einen Steckkontakt, insbesondere einen Steck-Klemmkontakt für das Kabel 20 bildet. Die Metallzunge ist hierzu abgewinkelt, im Wesentlichen U-förmig ausgebildet und weist einen Mittelschenkel 11 sowie zwei Seitenschenkel 12 und 13 auf, wobei der Seitenschenkel 13 kürzer ausgebildet ist als der Seitenschenkel 12. Ferner ist der kürzere Schenkel 13 zusätzlich geneigt angeordnet, derart, dass dessen Ende auf den längeren Schenkel 12 hin ausgerichtet ist.

Im Bereich des längeren Seitenschenkels 12 ist eine Schlitzung 14 ausgebildet, welche sich am oberen Ende, genau genommen am Übergangsbereich zu dem Mittelschenkel 11 zu einer Einstecköffnung 15 erweitert. In diese Einstecköffnung 15 kann das Ende des Kabels 20 eingesteckt werden, bis es schließlich den Endbereich des kürzeren Schenkels 13 erreicht. Dieser weist wie dargestellt eine Einkerbung 16 auf, welche das weitere Einführen des Kabelendes erleichtert. In diesem Fall wird dann der Schenkel 13 leicht zur Seite gedrückt, wobei er allerdings aufgrund der Federkraft der Metallzunge das Kabelende einklemmt. Ein über die Einstecköffnung 15 eingeführtes Kabelende wird dementsprechend zwischen beiden Schenkeln 12 und 13 klemmend und dementsprechend zuverlässig gehalten.

Um also nunmehr das Kabel 20 an den Akkumulator 1 anzuschließen, ist lediglich erforderlich, das Kabelende wie zuvor beschrieben an das Anschlusselement 10 anzustecken. Es ist offensichtlich, dass diese Maßnahme deutlich einfacher und schneller durchzuführen ist als die Herstellung einer Verbindung bei der aus dem Stand der Technik bekannten Lösung. Ferner ist der erforderliche Materialaufwand deutlich geringer, da auf eine spezielle Flachsteckhülse verzichtet werden kann.

Das Anschlusselement 10 ist vorzugsweise fest an der Stirnseite 3 des Akkumulators 1 angeordnet. Insbesondere kann dieses mit dem Akkumulator beispielsweise mittels Punktschweißen verbunden werden.

Die Figuren 1 und 2 zeigen ferner ein separates Aufsatzelement 30, welches auf die Stirnseite des Akkumulators 1 aufgesetzt werden kann. Dieses Aufsatzelement 30 besteht vorzugsweise aus einem isolierenden Material, insbesondere aus Kunststoff und stellt einen Berührungsschutz dar, der ein versehentliches Berühren des Endbereichs des Akkumulators 1 verhindert. Darüber hinaus können an dem Aufsatzelement 30 auch Mittel zur Befestigung bzw. Montage des Akkumulators 1 innerhalb des zugehörigen elektrischen Geräts vorgesehen sein.

Mit Hilfe des erfindungsgemäßen Anschlusselements wird dementsprechend die Herstellung der Verbindung zwischen Akkumulator und Gerät deutlich vereinfacht. Auch ist der Materialaufwand bei der erfindungsgemäßen Lösung deutlich geringer, was zu einer zusätzlichen Kostenersparnis führt.

## Patentansprüche

1. Akkumulator (1) bzw. Batterie mit einem Anschlusselement (10) zum unmittelbaren Anschließen eines Kabels (20) an den Akkumulator (1) bzw. die Batterie,
**dadurch gekennzeichnet,**
**dass** das Anschlusselement (10) einen Steck-Klemmkontakt bildet, wobei das Anschlusselement (10) aus einer Metallzunge gebildet ist, welche eine Einstecköffnung (15) für ein Kabelende aufweist.

2. Akkumulator bzw. Batterie nach Anspruch 1,
**dadurch gekennzeichnet,**
**dass** die Metallzunge im Wesentlichen U-förmig gebogen ist, wobei die Einstecköffnung (15) im Bereich des Mittelschenkels (11) der Metallzunge ausgebildet ist.

3. Akkumulator bzw. Batterie nach Anspruch 2,
**dadurch gekennzeichnet,**
**dass** die beiden Seitenschenkel (12, 13) der Metallzunge einen Klemmbereich für das Kabelende bilden.

4. Akkumulator bzw. Batterie nach Anspruch 3,
**dadurch gekennzeichnet,**
**dass** einer der beiden Seitenschenkel (12, 13) kürzer als der andere Schenkel (12, 13) ist und auf diesen Schenkel gerichtet ist.

5. Akkumulator bzw. Batterie nach Anspruch 4,
**dadurch gekennzeichnet,**
**dass** der kürzere der beiden Schenkel (12, 13) an seinem Ende eine Ausnehmung bzw. Einkerbung (16) aufweist.

6. Akkumulator bzw. Batterie nach einem der vorherigen Ansprüche,
**dadurch gekennzeichnet,**
**dass** das Anschlusselement (10) mit dem Akkumulator (1) bzw. der Batterie verschweißt oder verlötet ist.

7. Anordnung bestehend aus einem Akkumulator (1) bzw. einer Batterie gemäß einem der vorherigen Ansprüche sowie einem auf eine Stirnseite des Akkumulators (1) bzw. der Batterie aufzusetzenden Aufsatzelements (30), wobei das Aufsatzelement (30) einen Berührschutz für das Anschlusselement (10) bildet.

8. Anordnung nach Anspruch 7,
**dadurch gekennzeichnet,**
**dass** das Aufsatzelement (30) aus einem isolierenden Material, insbesondere aus Kunststoff besteht.

9. Anordnung nach Anspruch 7 oder 8,
**dadurch gekennzeichnet,**
**dass** das Aufsatzelement (30) zugleich ein Befestigungs- bzw. Montageelement für den Akkumulator (1) bzw. die Batterie bildet.

10. Akkumulatoranschlusselement bzw. Batterieanschlusselement (10) zur Verwendung an einem Akkumulator (1) bzw. einer Batterie, welches dazu vorgesehen ist, das unmittelbare Anschließen eines Kabels (20) an den Akkumulator (1) bzw. der Batterie zu ermöglichen,
**dadurch gekennzeichnet,**
**dass** das Anschlusselement (10) einen Steck-Klemmkontakt bildet, wobei das Anschlusselement (10) aus einer Metallzunge gebildet ist, welche eine Einstecköffnung (15) für ein Kabelende aufweist.

## Claims

1. An accumulator (1) or battery having a connection element (10) for the direct connection of a cable (20) to the accumulator (1) or the battery,
**characterised in that**
the connection element (10) forms a plug-clamp contact, wherein the connection element (10) is formed from a metal tongue which has an insertion opening (15) for a cable end.

2. An accumulator or battery according to claim 1, **characterised in that**
the metal tongue is bent in a substantially U-shaped manner, wherein the insertion opening (15) is formed in the region of the central leg (11) of the metal tongue.

3. An accumulator or battery according to claim 2, **characterised in that**
the two side legs (12, 13) of the metal tongue form a clamping region for the cable end.

4. An accumulator or battery according to claim 3, **characterised in that**
one of the two side legs (12, 13) is shorter than the other leg (12, 13) and is directed towards this leg.

5. An accumulator or battery according to claim 4, **characterised in that**
the shorter of the two legs (12, 13) has a recess or notch (16) at its end.

6. An accumulator or battery according to one of the previous claims,
**characterised in that**
the connection element (10) is welded or soldered to the accumulator (1) or the battery.

7. An arrangement consisting of an accumulator (1) or a battery according to one of the previous claims and also an attachment element (30) that is to be attached to an end face of the accumulator (1) or the battery, wherein the attachment element (30) forms a protector against contact for the connection element (10).

8. An arrangement according to claim 7,
**characterised in that**
the attachment element (30) consists of an insulating material, in particular plastics.

9. An arrangement according to claim 7 or 8, **characterised in that**
the attachment element (30) at the same time forms a securing or assembly element for the accumulator (1) or the battery.

10. An accumulator-connection element or battery-connection element (10) for use on an accumulator (1) or a battery that is provided to render possible the direct connection of a cable (20) to the accumulator (1) or the battery,
**characterised in that**
the connection element (10) forms a plug-clamp contact, wherein the connection element (10) is formed from a metal tongue which has an insertion opening (15) for a cable end.

## Revendications

1. Accumulateur (1) ou batterie comprenant un élément de raccordement (10) servant à raccorder directement un câble (20) à l'accumulateur (1) ou à la batterie,
caractérisé(e) en ce
que l'élément de raccordement (10) forme un contact de serrage par enfichage, sachant que l'élément de raccordement (10) est formé à partir d'une languette métallique, qui présente un orifice d'insertion (15) pour une extrémité de câble.

2. Accumulateur ou batterie selon la revendication 1,
caractérisé(e) en ce
que la languette métallique est courbée de manière à présenter essentiellement une forme de U, sachant que l'orifice d'insertion (15) est réalisé dans la zone de la branche médiane (11) de la languette métallique.

3. Accumulateur ou batterie selon la revendication 2,
caractérisé(e) en ce
que les deux branches latérales (12, 13) de la languette métallique forment une zone de serrage pour l'extrémité de câble.

4. Accumulateur ou batterie selon la revendication 3,
caractérisé(e) en ce
qu'une des deux branches latérales (12, 13) est plus courte que l'autre branche (12, 13) et est installée sur cette dernière.

5. Accumulateur ou batterie selon la revendication 4,
caractérisé(e) en ce
que la plus courte des deux branches (12, 13) présente au niveau de son extrémité un évidement ou une encoche (16).

6. Accumulateur ou batterie selon l'une quelconque des revendications précédentes,
caractérisé(e) en ce
que l'élément de raccordement (10) est soudé ou brasé à l'accumulateur (1) ou à la batterie.

7. Ensemble constitué d'un accumulateur (1) ou d'une batterie selon l'une quelconque des revendications précédentes ainsi que d'un élément rapporté (30) à poser sur un côté frontal de l'accumulateur (1) ou de la batterie, sachant que l'élément rapporté (30) forme une protection contre le contact pour l'élément de raccordement (10).

8. Ensemble selon la revendication 7,
**caractérisé en ce**
**que** l'élément rapporté (30) est constitué d'un matériau isolant, en particulier en matière plastique.

9. Ensemble selon la revendication 7 ou 8,
**caractérisé en ce**
**que** l'élément rapporté (30) forme également un élément de fixation ou de montage pour l'accumulateur (1) ou la batterie.

10. Elément de raccordement d'accumulateur ou élément de raccordement de batterie (10) destiné à être utilisé au niveau d'un accumulateur (1) ou d'une batterie, lequel est prévu pour permettre le raccordement direct d'un câble (20) à l'accumulateur (1) ou à la batterie,
**caractérisé en ce**
**que** l'élément de raccordement (10) forme un contact de serrage par enfichage, sachant que l'élément de raccordement (10) est constitué d'une languette métallique, laquelle présente un orifice d'insertion (15) pour une extrémité de câble.
